# EUROPÄISCHE PATENTSCHRIFT

(11) **EP 2 818 679 B1**
(45) Veröffentlichungstag und Bekanntmachung des Hinweises auf die Patenterteilung: **14.03.2018**
(21) Anmeldenummer: 14166736.0
(22) Anmeldetag: 30.04.2014
(51) Int. Cl.: F02M 21/02, F16K 31/06, F16K 47/04, F16K 47/08

(54) **Verfahren und Vorrichtung zum Einblasen eines gasförmigen Mediums**
Method and device for injecting a gaseous medium
Procédé et dispositif destinés à injecter un médium gazeux

(30) Priorität: 26.06.2013 DE 102013212191
(43) Veröffentlichungstag der Anmeldung: 31.12.2014
(73) Patentinhaber: ROBERT BOSCH GMBH, 70442 Stuttgart (DE)
(72) Erfinder: Gordon, Uwe, 71706 Markgroeningen (DE); Mitter, Roland, 4201 Gramastetten (AT)

(56) Entgegenhaltungen:
- EP-A1- 0 491 404
- WO-A1-99/18345
- WO-A1-2005/040591
- CA-A1- 2 847 547
- DE-A1- 10 261 610
- DE-A1-102005 046 433
- US-B1- 6 505 112

## Beschreibung

Die Erfindung betrifft ein Verfahren und eine Vorrichtung zum Einblasen eines gasförmigen Mediums, insbesondere eines gasförmigen Brennstoffs, in den Ansaugtrakt eines Gas- oder Diesel-Gas-Motors mit den Merkmalen des Oberbegriffs des Anspruchs 1 bzw. mit den Merkmalen des Oberbegriffs des Anspruchs 3.

### Stand der Technik

Elektromagnetisch betätigbare Gasventile zum Einblasen von gasförmigen Brennstoffen in einen Ansaugtrakt eines Motors sind allgemein bekannt. Der Einsatz solcher Ventile kann dabei in der Weise erfolgen, dass sie zu einer zentralen Einblaseinheit zur Versorgung mehrerer Zylinder des Motors mit gasförmigem Brennstoff zusammengefasst werden (central gas injection - "CGI") oder für jeden Zylinder ein separates Gasventil vorgesehen wird (multi point injection - "MPI").

Ein gattungsgemäßes Gasventil geht beispielsweise aus der Offenlegungsschrift DE 199 05 721 A1 hervor. Um bei gleichzeitig kurzen Schalt- und Ansprechzeiten einen großen Durchlassquerschnitt bereitzustellen, wird in dieser Druckschrift ein Gasventil vorgeschlagen, das als Flachsitzventil ausgebildet ist. Es besitzt einen ebenen Ventilsitz und ein Dichtelement mit zumindest einer, dem Ventilsitz zugewandten ebenen Dichtfläche. Diese Konstruktion soll Ventilquerschnitte von bis zu 10 mm² ermöglichen, die sich bei zugleich kleinen Schaltzeiten verlässlich schalten lassen sollen.

Ein weiteres, ebenfalls als Flachsitzventil ausgebildetes Gasventil ist ferner aus der WO 2009/152 414 A2 bekannt.

Aus der WO 2005/040591 A1 ist ein elektrisch betätigbarer Injektor zur Versorgung einer Brennkraftmaschine mit einem gasförmigen Brennstoff bekannt, bei dem der Brennstoff über einen Strömungsweg geführt wird, der durch ein hubbewegliches Ventilglied begrenzt wird, in das ein in den Strömungsweg vorstehendes Element eingesetzt ist. Auf diese Weise sollen Turbulenzen minimiert werden, was wiederum zu einem verringerten Druckabfall führen soll, um den Massenfluss des gasförmigen Brennstoffs zu maximieren.

Ein Injektor zur Brennstoffversorgung einer Brennkraftmaschine geht ferner aus der CA 2 847 547 A1 hervor. Der Brennstoff wird über einen Strömungspfad geführt, der durch ein hubbewegliches Ventilglied absperrbar ist. Das hubbewegliche Ventilglied weist hierzu ein elastisches Dichtelement mit einer im Wesentlichen ringförmigen Dichtkontur auf, die mit einem eine zentrale Abströmöffnung des Injektors begrenzenden Flachsitz zusammenwirkt. Um einen Druckabfall im Bereich der Abströmöffnung zu verhindern, sind der Sitzdurchmesser und der Hub des Ventilgliedes derart bemessen, dass sich ein freier Strömungsquerschnitt S₁ ergibt, der gleich groß oder größer als ein Strömungsquerschnitt S₂ im Bereich der Abströmöffnung ist.

Die DE 10 2005 046 433 A1 offenbart zudem ein Ventil zum Steuern eines Gases, das abströmseitig eine Gasumlenkungs- und/oder Gasverteilungseinrichtung besitzt, die gewährleisten soll, dass der Gasstrom einem Saugrohr hinsichtlich Einströmwinkel und Einströmhöhe optimiert zugeführt wird.

Beim Einblasen eines gasförmigen Mediums, insbesondere eines gasförmigen Brennstoffs, in den Ansaugtrakt eines Gas- oder Diesel-Gas-Motors bestimmen der Druck des gasförmigen Mediums und die Öffnungsdauer des Ventils das in den Ansaugtrakt eingeblasene Gasvolumen. Zur Volumensteuerung kann beispielsweise die Bestromung eines Elektromagneten, mittels dessen das Gasventil ansteuerbar ist, variiert werden, um eine kurze oder lange Öffnungsdauer zu realisieren und damit ein kleines bzw. großes Brennstoffvolumen einzublasen.

Da heutige Motoren oftmals bei extremen Magerbetrieb (A > 1) betrieben werden, ist es besonders wichtig, für ein homogenes Brennstoff-Luft-Gemisch im Zylinder des Motors zu sorgen. Das Brennstoff-Luft-Gemisch wird im Ansaugtrakt, zwischen Gasventil und Brennraum, gebildet. Dabei kann die Länge des Strömungsweges vom Gasventil zum Brennraum entscheidend sein, ob eine homogene Gemischbildung erreicht wird, die eine gleichmäßige Verbrennung des Gasgemisches im Brennraum sicherstellt.

Ausgehend von dem vorstehend genannten Stand der Technik liegt der vorliegenden Erfindung die Aufgabe zugrunde, ein Verfahren sowie eine Vorrichtung zum Einblasen eines gasförmigen Mediums in einen Ansaugtrakt eines Motors anzugeben, welche eine homogene Gemischbildung im Ansaugtrakt fördern.

Zur Lösung der Aufgabe werden das Verfahren mit den Merkmalen des Anspruchs 1 sowie die Vorrichtung mit den Merkmalen des Anspruchs 3 vorgeschlagen. Vorteilhafte Weiterbildungen der Erfindung sind den jeweiligen Unteransprüchen zu entnehmen.

### Offenbarung der Erfindung

Das zum Einblasen eines gasförmigen Mediums, insbesondere eines gasförmigen Brennstoffs, in einen Ansaugtrakt eines Gas- oder Diesel-Gas-Motors vorgeschlagene Verfahren sieht die Verwendung eines elektromagnetisch ansteuerbaren Gasventils vor. Erfindungsgemäß wird das gasförmige Medium über wenigstens zwei hintereinander geschaltete Drosselstellen in den Ansaugtrakt eingeblasen. Dies hat eine Erhöhung der Strömungsgeschwindigkeit zur Folge, welche wiederum eine homogene Gemischbildung im Ansaugtrakt unterstützt.

Die Erhöhung der Strömungsgeschwindigkeit wird vorliegend dadurch bewirkt, dass im Bereich einer Drosselstelle der Strömungsquerschnitt derart reduziert wird, dass der Druck des gasförmigen Mediums sinkt, aber die Geschwindigkeit steigt ("Venturi-Effekt"). Die Druckenergie wird demnach in Geschwindigkeit umgesetzt, wodurch sich die Gemischbildung des gasförmigen Mediums mit der im Ansaugtrakt vorhandenen Luft deutlich verbessert.

Die Drosselstellen werden vorzugsweise über das elektromagnetisch ansteuerbare Gasventil ausgebildet, das bei dem erfindungsgemäßen Verfahren zum Einblasen des gasförmigen Mediums in den Ansaugtrakt verwendet wird. Das heißt, dass bevorzugt die Drosselstellen in einen Strömungsweg des Gasventils integriert sind. Auf diese Weise vermag das Gasventil eine optimale Gemischbildung zu unterstützen.

Zur Durchführung des erfindungsgemäßen Verfahrens kann beispielsweise die ferner vorgeschlagene Vorrichtung zum Einblasen eines gasförmigen Mediums verwendet, welche ein elektromagnetisch ansteuerbares Gasventil umfasst.

Gemäß der Erfindung werden die Strömungsquerschnitte der Drosselstellen aufeinander abgestimmt. Dabei wird der Strömungsquerschnitt A₂ einer nachgeschalteten Drosselstelle kleiner als der Strömungsquerschnitt A₁ einer stromaufwärts davon liegenden Drosselstelle gewählt (A₁/A₂ > 1). Das heißt, dass die Drosselwirkung im Bereich der stromaufwärts liegenden Drosselstelle und demzufolge der Druckverlust geringer sind, so dass mit Erreichen der nachgeschalteten Drosselstelle ausreichend Druckenergie zur Umsetzung in Geschwindigkeit vorhanden ist.

In Weiterbildung des Verfahrens wird vorgeschlagen, dass die wenigstens eine weitere nachgeschaltete Drosselstelle zur Strömungslenkung des gasförmigen Mediums beim Einblasen in den Ansaugtrakt eingesetzt wird. Über die Strömungslenkung kann - je nach Bedarf - eine symmetrische oder eine asymmetrische Verteilung des gasförmigen Mediums über den Querschnitt des Ansaugtraktes erreicht werden.

Zur Lösung der eingangs genannten Aufgabe wird ferner eine Vorrichtung zum Einblasen eines gasförmigen Mediums, insbesondere eines gasförmigen Brennstoffs, in einen Ansaugtrakt eines Gas- oder Diesel-Gas-Motors vorgeschlagen. Die Vorrichtung umfasst ein elektromagnetisch ansteuerbares Gasventil, das eine Ventilplatte mit mehreren Durchströmöffnungen besitzt, die über den Hub eines hubbeweglichen Ventiltellers freigebbar oder verschließbar ist. Erfindungsgemäß ist stromabwärts der Durchströmöffnungen wenigstens eine Drosselstelle in den Strömungsweg des gasförmigen Mediums zur Erhöhung der Strömungsgeschwindigkeit des gasförmigen Mediums integriert. Denn beim Durchströmen der Drosselstelle fällt der Druck des gasförmigen Mediums ab und die Strömungsgeschwindigkeit steigt ("Venturi-Effekt"). Dies wiederum hat zur Folge, dass die Gemischbildung des gasförmigen Mediums mit der im Ansaugtrakt vorhandenen Luft verbessert wird.

Der Drosselstelle ist eine weitere Drosselstelle vorgeschaltet, die in Abhängigkeit vom Hub des Ventiltellers zwischen dem Ventilteller und der Ventilplatte in Offenstellung des Gasventils ausgebildet wird. Das gasförmige Medium passiert demnach wenigstens zwei Drosselstellen, bevor es in den Ansaugtrakt gelangt. Dabei sind die Strömungsquerschnitte der Drosselstellen derart aufeinander abgestimmt, dass stromaufwärts einer unmittelbar in den Ansaugtrakt mündenden Drosselstelle noch ein ausreichender Druck vorhanden ist, um die Druckenergie in Geschwindigkeit umzusetzen.

Ein Strömungsquerschnitt A₂ der nachgeschalteten Drosselstelle ist daher kleiner als der Strömungsquerschnitt A₁ der stromaufwärts davon liegenden Drosselstelle gewählt (A₁/A₂ > 1). Das heißt, dass die Drosselwirkung im Bereich der stromaufwärts liegenden Drosselstelle und demzufolge der Druckverlust geringer sind, so dass mit Erreichen der nachgeschalteten Drosselstelle ausreichend Druckenergie zur Umsetzung in Geschwindigkeit vorhanden ist.

Idealerweise werden zwei Fälle bei der Auslegung und Abstimmung der Drosselquerschnitte unterschieden:

Im ersten Fall sind die Druckverhältnisse unterkritisch. Eine Drosselwirkung wird über den Hub des Ventiltellers erreicht. Diese sollte so schwach sein, dass beim eingestellten Hub Hubunabhängigkeit besteht, so dass vorzugsweise der Durchfluss ausschließlich über die stromabwärts angeordnete, weitere Drosselstelle bestimmt wird. Es gilt allgemein: A₂ < A₁.

Im zweiten Fall sind die Druckverhältnisse überkritisch, d. h., dass Schallgeschwindigkeit erreicht wird. Dabei sind die Drosselstellen bevorzugt derart aufeinander abzustimmen, dass die überkritischen Druckverhältnisse an der stromabwärts angeordneten, weiteren Drosselstelle vorliegen. Denn dann ist der Durchfluss unabhängig vom Gegendruck. Vorzugsweise ist hierzu die stromabwärts angeordnete, weitere Drosselstelle derart ausgelegt, dass gilt: A₂ ≤ 0,8 x A₁.

Bei einer entsprechenden Auslegung bzw. Abstimmung der Drosselstellen kann eine optimale Homogenisierung eines Gasgemisches bewirkt werden.

Gemäß der Erfindung besitzt der Ventilteller mehrere Durchströmöffnungen, die versetzt zu den Durchströmöffnungen der Ventilplatte angeordnet sind. Der Ventilteller wird demnach im Betrieb der Vorrichtung nicht nur von dem gasförmigen Medium umströmt, sondern ferner durchströmt. Die zwischen den mehreren Durchströmöffnungen verbleibenden Flächen des Ventiltellers können in diesem Fall als Dichtflächen eingesetzt werden, die in Anlage mit der Ventilplatte ein Verschließen der in der Ventilplatte ausgebildeten Durchströmöffnungen bewirken. Das Gasventil kann demzufolge als Flachsitzventil ausgebildet sein, wobei die dem Ventilteller zugewandte Stirnfläche der Ventilplatte den Ventilsitz bildet.

Des Weiteren wird vorgeschlagen, dass die nachgeschaltete Drosselstelle eine Durchströmöffnung in einem plattenförmigen Bauteil ist. Das plattenförmige Bauteil bildet vorzugsweise ein Bauteil des Gasventils aus und ist weiterhin vorzugsweise fest mit einem Gehäuseteil des Gasventils verbunden. Vorteilhafterweise besitzt das plattenförmige Bauteil mehrere, vorzugsweise gleichartige Durchströmöffnungen, die jeweils parallel geschaltete Drosselstellen ausbilden. Beispielsweise kann das plattenförmige Bauteil zumindest teilweise als Gitter ausgebildet sein.

Bevorzugt begrenzen das plattenförmige Bauteil und die Ventilplatte gemeinsam einen Raum, über den die hintereinandergeschalteten Drosselstellen fluidisch verbunden sind. Der Raum bildet eine Art Vorkammer aus, in welcher bereits eine Mischung des gasförmigen Mediums mit der dort vorhandenen Luft erfolgt.

Das plattenförmige Bauteil kann eine beliebige Form besitzen. Es kann beispielsweise flach, d. h. eben, ausgebildet sein oder geneigte Oberflächen besitzen. In einer bevorzugten Ausgestaltung der Erfindung ist das plattenförmige Bauteil zumindest teilweise konvex oder konkav geformt. Alternativ oder ergänzend wird vorgeschlagen, dass wenigstens zwei Durchströmöffnungen des plattenförmigen Bauteils unterschiedlich gegenüber einer Längsachse A des Gasventils geneigte Längsachsen besitzen. Beispielsweise können die Längsachsen derart ausgerichtet sein, dass sie sich in einem Punkt treffen. Dieser Punkt kann zugleich der Mittelpunkt eines Teilkreises sein, dem die konvexe oder konkave Krümmung des plattenförmigen Bauteils folgt.

Durch unterschiedliche Neigung der Längsachsen der Durchströmöffnungen des plattenförmigen Bauteils gegenüber der Längsachse A kann die Strömung des gasförmigen Mediums gelenkt werden. Beispielsweise kann sie auf einen bestimmten Teil des Querschnitts des Ansaugtraktes gerichtet werden, um bei Bedarf eine asymmetrische Verteilung zu erzielen.

Eine asymmetrische Verteilung kann alternativ oder ergänzend dadurch bewirkt werden, dass das die Durchströmöffnungen im plattenförmigen Bauteil ungleichmäßig verteilt angeordnet sind. Das heißt, dass die Abstände zwischen den Durchströmöffnungen variieren können. Ferner können die Strömungsquerschnitte der mehreren Durchströmöffnungen unterschiedlich gewählt sein.

Ist keine asymmetrische Verteilung erwünscht, kann durch gleichmäßig verteilt angeordnete Durchströmöffnungen mit gleichen Strömungsquerschnitten eine symmetrische Verteilung erzielt werden, die eine besonders homogene Gemischbildung fördert.

Bevorzugte Ausführungsformen einer erfindungsgemäßen Vorrichtung werden nachfolgend anhand der beigefügten Figuren näher beschrieben. Diese zeigen:
- Figur 1: einen Längsschnitt durch eine erfindungsgemäße Vorrichtung gemäß einer ersten bevorzugten Ausführungsform und
- Figur 2: einen Längsschnitt durch eine erfindungsgemäße Vorrichtung gemäß einer zweiten bevorzugten Ausführungsform.

### Ausführliche Beschreibung der Figuren

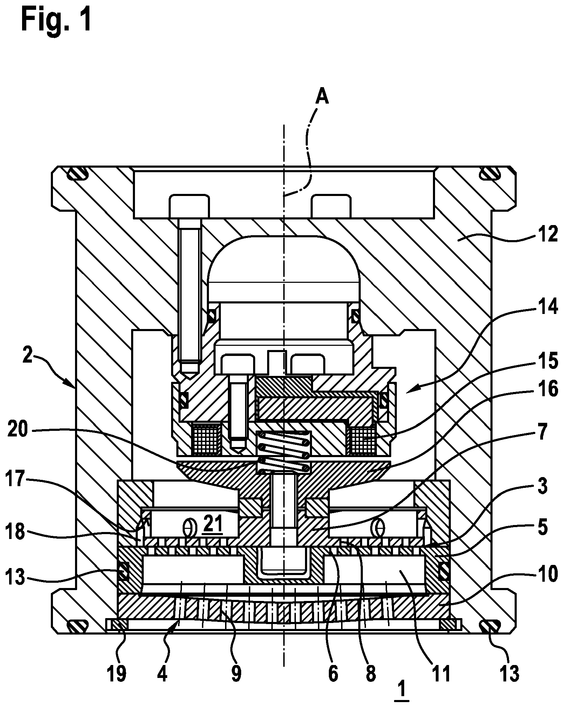

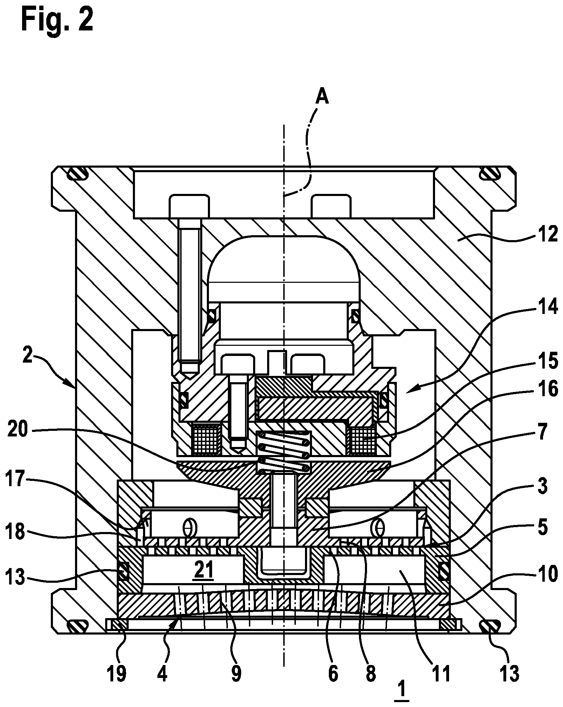

Die in den Figuren 1 und 2 dargestellten Vorrichtungen umfassen jeweils ein Gehäuse 12, in das ein Gasventil 2 eingesetzt ist. Über das Gehäuse 12 ist das Gasventil 2 an einen Ansaugtrakt 1 axial ansetzbar, wobei die Abdichtung über einen in das Gehäuse 12 eingesetzten Dichtring 13 erfolgt.

Das im Gehäuse 12 aufgenommene Gasventil 2 umfasst - sowohl im Ausführungsbeispiel der Figur 1, als auch im Ausführungsbeispiel der Figur 2 - eine Ventilplatte 5 mit mehreren Durchströmöffnungen 6, die über einen hubbeweglichen Ventilteller 7 freigebbar oder verschließbar sind. Die dem Ventilteller 7 zugewandte Stirnfläche der Ventilplatte 5 wirkt dabei als Flachsitz mit dem Ventilteller 7 zusammen. Um den Durchfluss eines gasförmigen Mediums durch die Ventilplatte 5 zu erhöhen, weist der Ventilteller 7 mehrere Durchströmöffnungen 8 auf, die versetzt zu den Durchströmöffnungen 6 der Ventilplatte 5 angeordnet sind. Die versetzte Anordnung gewährleistet ein dichtes Schließen des Gasventils 2. In Offenstellung des Ventils werden zunächst die Durchströmöffnungen 8 des Ventiltellers 7 von dem gasförmigen Medium durchströmt. Anschließend wird das gasförmige Medium zweimal umgelenkt, wobei es zwischen dem Ventilteller 7 und der Ventilplatte 5 hindurch strömt. Der maximale Strömungsquerschnitt zwischen dem Ventilteller 7 und der Ventilplatte 5 wird dabei durch den maximalen Hub des Ventiltellers 7 definiert. Dieser ist vorliegend derart gewählt, dass zwischen dem Ventilteller 7 und der Ventilplatte 5 eine erste Drosselstelle 3 ausgebildet wird. Die Drosselstelle 3 bewirkt einen Druckabfall und zugleich eine Erhöhung der Strömungsgeschwindigkeit des gasförmigen Mediums bevor es zu den Durchströmöffnungen 6 der Ventilplatte 5 gelangt. Mit Durchströmen der Ventilplatte 5 gelangt das gasförmige Medium in einen Raum 11, der weiter stromabwärts von einem plattenförmigen Bauteil 10 des Gasventils 2 begrenzt wird. Das plattenförmige Bauteil 10 weist mehrere Durchströmöffnungen 9 auf, die parallel geschaltete Drosselstellen 4 stromabwärts der Drosselstelle 3 ausbilden.

Im Ausführungsbeispiel der Figur 1 weist das plattenförmige Bauteil 10 eine Form auf, die in Strömungsrichtung konvex gebogen ist. Der bogenförmige Verlauf folgt dabei einem Teilkreis. Die mehreren Durchströmöffnungen 9 weisen Längsachsen auf, die gegenüber einer Längsachse A des Gasventils 2 unterschiedlich geneigt sind, wobei sich die Längsachsen der Durchströmöffnungen 9 in einem Punkt schneiden. Dieser Punkt fällt mit dem Mittelpunkt des Teilkreises zusammen, dem der bogenförmige Verlauf des plattenförmigen Bauteils 10 folgt. Das durch die Durchströmöffnungen 9 des plattenförmigen Bauteils 10 hindurchströmende gasförmige Medium wird auf diese Weise in einem sich aufweitenden Kegel in den Ansaugtrakt 1 eingeblasen. Dies führt zu einer gleichmäßigen Verteilung des gasförmigen Mediums im Ansaugtrakt 1. Unterstützend wirkt ferner, dass die Durchströmöffnungen 9 des plattenförmigen Bauteils 10 regelmäßig, d. h. in gleichmäßigen Abständen, angeordnet sind und gleiche Strömungsquerschnitte besitzen.

Im Ausführungsbeispiel der Figur 2 weist das plattenförmige Bauteil 10 eine Form auf, die in Strömungsrichtung konkav gebogen ist. Der bogenförmige Verlauf folgt wiederum einem Teilkreis. Die mehreren Durchströmöffnungen 9 weisen Längsachsen auf, die gegenüber einer Längsachse A des Gasventils 2 unterschiedlich geneigt sind, wobei sich die Längsachsen der Durchströmöffnungen 9 in einem Punkt schneiden, der vorliegend mit dem Mittelpunkt des Teilkreises zusammenfällt, dem der bogenförmige Verlauf des plattenförmigen Bauteils 10 folgt. Das durch die Durchströmöffnungen 9 des plattenförmigen Bauteils 10 hindurchströmende gasförmige Medium wird auf diese Weise in einem sich verengendem Kegel in den Ansaugtrakt 1 eingeblasen. Dies führt zu einer Konzentrierung des gasförmigen Mediums im Zentrum des Ansaugtraktes 1. Unterstützend wirkt hier ebenfalls, dass die Durchströmöffnungen 9 des plattenförmigen Bauteils 10 regelmäßig, d. h. in gleichmäßigen Abständen, angeordnet sind und gleiche Strömungsquerschnitte besitzen.

Über das plattenförmige Bauteil 10 des Gasventils 2 kann demnach das gasförmige Medium beim Einblasen in den Ansaugtrakt 1 gezielt verteilt werden. Dabei kann auch eine asymmetrische Verteilung über den Querschnitt des Ansaugtraktes 1 bewirkt werden, wenn die Längsachsen der Durchströmöffnungen 9 des plattenförmigen Bauteils 10 entsprechend orientiert werden und/oder die Durchströmöffnungen 9 - abweichend von den Ausführungsbeispielen der Figuren 1 und 2 - nicht regelmäßig angeordnet werden.

Die in den Figuren 1 und 2 dargestellten Vorrichtungen weisen jeweils einen Magnetaktor 14 zur Betätigung des Gasventils 2 auf. Der Magnetaktor 14 ist jeweils im Gehäuse 12 aufgenommen und umfasst eine Magnetspule 15. Bei einer Bestromung der Magnetspule 15 wird ein mit dem Ventilteller 7 verbundener Anker 16 in Richtung der Magnetspule 15 gezogen, so dass der Ventilteller 7 von der Ventilplatte 5 abhebt und das Gasventil 2 öffnet. Der Ventilteller 7 und die Ventilplatte 5 werden von dem gasförmigen Medium durchströmt, das über mehrere im Ventilteller 7 ausgebildete Radialbohrungen 17 in einen Ventilraum 21 gelangt. Der Zustrom des gasförmigen Mediums zu den Radialbohrungen 17 erfolgt über einen den Ventilteller 7 umgebenden Ringraum 18.

Zum Schließen des Gasventils 2 wird die Bestromung der Magnetspule 15 beendet, so dass die Federkraft einer einerseits gehäuseseitig und andererseits am Anker 16 abgestützten Feder 20 den Anker 16 einschließlich des Ventiltellers 7 in die jeweilige Ausgangslage zurückstellt.

Der Ventilteller 5 ist in das Gehäuse 12 derart eingesetzt, dass es unter radialer Vorspannung am Gehäuse 12 anliegt. Die radiale Vorspannung wird vorliegend über einen Dichtring 13 bewirkt, der zugleich der Abdichtung dient. Das plattenförmige Bauteil 10 ist vor die Ventilplatte 5 gesetzt, d. h. es liegt stromabwärts der Ventilplatte 5. Über einen Sprengring 19 wird das plattenförmige Bauteil 10 in seiner axialen Lage fixiert. Das plattenförmige Bauteil 10 ist somit fest mit dem Gasventil 2 verbunden.

## Patentansprüche

1. Verfahren zum Einblasen eines gasförmigen Mediums, insbesondere eines gasförmigen Brennstoffs, in einen Ansaugtrakt (1) eines Gas- oder Diesel-Gas-Motors unter Verwendung eines elektromagnetisch ansteuerbaren Gasventils (2), das eine Ventilplatte (5) mit mehreren Durchströmöffnungen (6) besitzt, die über den Hub eines hubbeweglichen Ventiltellers (7), der mehrere, versetzt zu den Durchströmöffnungen (6) der Ventilplatte (5) angeordnete Durchströmöffnungen (8) besitzt, freigebbar oder verschließbar ist, wobei stromabwärts der Durchströmöffnungen (6) wenigstens eine Drosselstelle (4) in den Strömungsweg des gasförmigen Mediums integriert ist, der eine weitere Drosselstelle (3) vorgeschaltet ist, so dass das gasförmige Medium zur Erhöhung der Strömungsgeschwindigkeit über wenigstens zwei hintereinander geschaltete Drosselstellen (3, 4) in den Ansaugtrakt (1) eingeblasen wird,
**dadurch gekennzeichnet, dass** die weitere Drosselstelle (3) in Abhängigkeit vom Hub des Ventiltellers (7) zwischen dem Ventilteller (7) und der Ventilplatte (5) in Offenstellung des Gasventils (2) ausgebildet wird und die Strömungsquerschnitte (A₁, A₂) der Drosselstellen (3, 4) aufeinander abgestimmt werden, wobei der Strömungsquerschnitt (A₂) der nachgeschalteten Drosselstelle (4) kleiner als der Strömungsquerschnitt (A₁) der stromaufwärts davon liegenden Drosselstelle (3) gewählt wird.

2. Verfahren nach Anspruch 1,
**dadurch gekennzeichnet, dass** die wenigstens eine weitere nachgeschaltete Drosselstelle (4) zur Strömungslenkung des gasförmigen Mediums beim Einblasen in den Ansaugtrakt (1) eingesetzt wird.

3. Vorrichtung zum Einblasen eines gasförmigen Mediums, insbesondere eines gasförmigen Brennstoffs, in einen Ansaugtrakt (1) eines Gas- oder Diesel-Gas-Motors, umfassend ein elektromagnetisch ansteuerbares Gasventil (2), das eine Ventilplatte (5) mit mehreren Durchströmöffnungen (6) besitzt, die über den Hub eines hubbeweglichen Ventiltellers (7), der mehrere, versetzt zu den Durchströmöffnungen (6) der Ventilplatte (5) angeordnete Durchströmöffnungen (8) besitzt, freigebbar oder verschließbar ist, wobei stromabwärts der Durchströmöffnungen (6) wenigstens eine Drosselstelle (4) in den Strömungsweg des gasförmigen Mediums zur Erhöhung der Strömungsgeschwindigkeit des gasförmigen Mediums integriert ist und wobei der Drosselstelle (4) eine weitere Drosselstelle (3) vorgeschaltet ist,
**dadurch gekennzeichnet, dass** die weitere Drosselstelle (3) in Abhängigkeit vom Hub des Ventiltellers (7) zwischen dem Ventilteller (7) und der Ventilplatte (5) in Offenstellung des Gasventils (2) ausgebildet wird und einen Strömungsquerschnitt (A₁) besitzt, der größer als ein Strömungsquerschnitt (A₂) der stromabwärts angeordneten Drosselstelle (4) ist.

4. Vorrichtung nach Anspruch 3,
**dadurch gekennzeichnet, dass** die nachgeschaltete Drosselstelle (4) eine Durchströmöffnung (9) in einem plattenförmigen Bauteil (10) ist.

5. Vorrichtung nach Anspruch 4,
**dadurch gekennzeichnet, dass** das plattenförmige Bauteil (10) und die Ventilplatte (5) gemeinsam einen Raum (11) begrenzen, über den die Drosselstellen (3, 4) fluidisch verbunden sind.

6. Vorrichtung nach Anspruch 4 oder 5,
**dadurch gekennzeichnet, dass** das plattenförmige Bauteil (10) zumindest teilweise konvex oder konkav geformt ist und/oder wenigstens zwei Durchströmöffnungen (9) des plattenförmigen Bauteils (10) unterschiedlich gegenüber einer Längsachse (A) des Gasventils (2) geneigte Längsachsen (a, b) besitzen.

## Claims

1. Method for injecting a gaseous medium, in particular a gaseous fuel, into an intake tract (1) of a gas engine or diesel-gas engine using an electromagnetically actuable gas valve (2) which has a valve plate (5) with a plurality of throughflow openings (6) which can be opened up or closed off by means of the stroke of a valve disk (7), which valve disk can perform a stroke movement and has a plurality of throughflow openings (8) arranged offset with respect to the throughflow openings (6) of the valve plate (5), wherein, downstream of the throughflow openings (6), at least one throttling point (4) is integrated into the flow path of the gaseous medium, wherein a further throttling point (3) is positioned upstream of said at least one throttling point (4), such that, in order to increase the flow speed, the gaseous medium is injected into the intake tract (1) via at least two throttling points (3, 4) positioned in series,
**characterized in that** the further throttling point (3) is formed, in a manner dependent on the stroke of the valve disk (7), between the valve disk (7) and the valve plate (5) when the gas valve (2) is in the open position and the flow cross sections (A₁, A₂) of the throttling points (3, 4) are coordinated with one another, wherein the flow cross section (A₂) of the downstream throttling point (4) is smaller than the flow cross section (A₁) of the throttling point (3) situated upstream thereof.

2. Method according to Claim 1,
**characterized in that** the at least one further, downstream throttling point (4) is used for diverting the flow of the gaseous medium as it is injected into the intake tract (1).

3. Device for injecting a gaseous medium, in particular a gaseous fuel, into an intake tract (1) of a gas engine or diesel-gas engine, comprising an electromagnetically actuable gas valve (2) which has a valve plate (5) with a plurality of throughflow openings (6) which can be opened up or closed off by means of the stroke of a valve disk (7), which valve disk can perform a stroke movement and has a plurality of throughflow openings (8) arranged offset with respect to the throughflow openings (6) of the valve plate (5), wherein, downstream of the throughflow openings (6), at least one throttling point (4) is integrated into the flow path of the gaseous medium in order to increase the flow speed of the gaseous medium and wherein the throttling point (4) has positioned upstream thereof a further throttling point (3), **characterized in that** the further throttling point (3) is formed, in a manner dependent on the stroke of the valve disk (7), between the valve disk (7) and the valve plate (5) when the gas valve (2) is in the open position and has a flow cross section (A₁) which is larger than a flow cross section (A₂) of the throttling point (4) arranged downstream.

4. Device according to Claim 3,
**characterized in that** the downstream throttling point (4) is a throughflow opening (9) in a plate-shaped component (10).

5. Device according to Claim 4,
**characterized in that** the plate-shaped component (10) and the valve plate (5) together delimit a chamber (11) via which the throttling points (3, 4) are fluidically connected.

6. Device according to Claim 4 or 5,
**characterized in that** the plate-shaped component (10) is at least partially of convex or concave form and/or at least two throughflow openings (9) of the plate-shaped component (10) have longitudinal axes (a, b) inclined differently relative to a longitudinal axis (A) of the gas valve (2).

## Revendications

1. Procédé d'injection d'un fluide gazeux, en particulier d'un combustible gazeux, dans le conduit d'aspiration (1) d'un moteur à gaz ou diesel-gaz, par recourus à une soupape à gaz (2) commandée électromagnétiquement, qui possède une plaque (5) de soupape dotée de plusieurs perforations (6) et qui peut être ouverte ou fermée par l'intermédiaire de la course d'un plateau de soupape (7) à course mobile dont les perforations (8) sont décalées par rapport aux perforations (6) de la plaque de soupape (5),
au moins un étranglement (4) étant intégré dans le parcours d'écoulement du fluide gazeux en aval des perforations (6) et étant précédé par autre étranglement (3) de telle sorte qu'en vue d'augmenter sa vitesse d'écoulement, le fluide gazeux soit injecté dans le conduit d'aspiration (1) par l'intermédiaire d'au moins deux étranglements (3, 4) raccordés l'un à la suite de l'autre,
**caractérisé en ce que**
lorsque la soupape à gaz (2) est en position ouverte, l'autre étranglement (3) est formé entre le plateau de soupape (7) et la plaque de soupape (5) en fonction de la course du plateau de soupape (7),
**en ce que** les sections transversales d'écoulement (A₁, A₂) des étranglements (3, 4) sont accordées l'une à l'autre et la section transversale d'écoulement (A₂) de l'étranglement aval (4) est plus petite que la section transversale d'écoulement (A₁) de l'étranglement amont (3).

2. Procédé selon la revendication 1, **caractérisé en ce que** le ou les autres étranglements aval (4) sont utilisés pour dévier l'écoulement de fluide gazeux lors de l'injection dans le conduit d'aspiration (1).

3. Ensemble d'injection d'un fluide gazeux, en particulier d'un combustible gazeux, dans le conduit d'aspiration (1) d'un moteur à gaz ou à diesel-gaz, comprenant une soupape à gaz (2) commandée électromagnétiquement, qui possède une plaque (5) de soupape dotée de plusieurs perforations (6) et qui peut être ouverte ou fermée par l'intermédiaire de la course d'un plateau de soupape (7) à course mobile dont les perforations (8) sont décalées par rapport aux perforations (6) de la plaque de soupape (5),
au moins un étranglement (4) étant intégré dans le parcours d'écoulement du fluide gazeux en aval des perforations (6) et l'étranglement (4) étant précédé par autre étranglement (3) en vue d'augmenter sa vitesse d'écoulement,
**caractérisé en ce que**
lorsque la soupape à gaz (2) est en position ouverte, l'autre étranglement (3) est formé entre le plateau de soupape (7) et la plaque de soupape (5) en fonction de la course du plateau de soupape (7) et possède une section transversale d'écoulement (A₁) plus grande que la section transversale d'écoulement (A₂) de l'étranglement aval (4).

4. Ensemble selon la revendication 3, **caractérisé en ce que** l'étranglement aval (4) est une perforation (9) ménagée dans un composant (10) en forme de plaque.

5. Ensemble selon la revendication 4, **caractérisé en ce que** le composant (10) en forme de plaque et la plaque de soupape (5) délimitent ensemble un espace (11) par lequel les étranglements (3, 4) sont reliés l'un à l'autre à écoulement.

6. Ensemble selon les revendications 4 ou 5,
**caractérisé en ce que** le composant (10) en forme de plaque est au moins en partie convexe ou concave et/ou **en ce que** les axes longitudinaux (a, b) d'au moins deux perforations (9) du composant (10) en forme de plaque sont inclinés différemment par rapport à l'axe longitudinal (A) de la soupape à gaz (2).
